# EUROPEAN PATENT SPECIFICATION

(11) **EP 1 080 813 B1**
(45) Date of publication and mention of the grant of the patent: **18.09.2002**
(21) Application number: 00307414.3
(22) Date of filing: 29.08.2000
(51) Int. Cl.: B23B 47/28

(54) **Doweling jig**
Verdübelungs-Bohrlehre
Gabarit pour chevilles

(30) Priority: 02.09.1999 CA 2281372; 25.10.1999 US 426317
(43) Date of publication of application: 07.03.2001
(73) Proprietor: Lindsay, James S., North Vancouver, B.C. V7P 1M6 (CA)
(72) Inventor: Lindsay, James S., North Vancouver, B.C. V7P 1M6 (CA)
(74) Representative: McKechnie, Neil

(56) References cited:
- FR-A- 2 240 799
- US-A- 5 782 006

## Description

This invention relates to doweling jigs in general, and more particularly, to a clamp-type doweling jig for locating in-line holes to be drilled in a wooden workpiece.

US-A- 5 782 006, which is considered to represent the most relevant prior art discloses a doweling jig comprising two symmetrically arranged attachment plates for centering.

Doweling jigs for drilling corresponding holes in mating wooden workpieces, and thereby making possible the matching of these holes for the insertion of dowels and thus, the joining of the wooden workpieces in a desired engagement, are known. The engagements accommodate edge-to-edge, end-to-edge, edge-to-face, end-to-end and mitered joints.

Attempts have been made in the past to develop a better doweling jig. United States Patent No. 5,407,307 for a "Doweling Jig" discloses a device having upper and lower clamping assemblies which move with respect to each other via a thrust screw assembly. The device has a number of shortcomings. First, two wooden workpieces are clamped together, one of which has previously been drilled, and in which dowels are installed through alignment slots, provided in the upper clamping assembly. As can be seen, there is a dependency on a previously drilled workpiece. Second, the device is provided with, besides drill guides, alignment slots and with guide slides between the upper and lower clamping assemblies. Thus, the jig described therein appears to be complicated, expensive to make and limited in use since it has only two drill guides.

United States Patent No. 4,421,442 for a "Doweling Jig" discloses a device which comprises two clamping jaw and drill guide assemblies, each of these assemblies having a clamping face and a drill guide which is immovable with respect to the clamping face. This device can be considered to have several disadvantages. In making use of the device in drilling corresponding pairs of dowel receiving holes in the two edges of two wooden workpieces, the latter must first be clamped together by a clamping fixture. Then, the doweling jig is clamped to the wooden workpieces, so that the drill guides are juxtaposed to the edges. After each two opposite dowel receiving holes are drilled, the device is unclamped, moved to the next opposite pair of dowel receiving holes and re-clamped.

As can be seen from the above patents, the disclosed devices are not easy to work with, require frequent set-ups and are thus, not quick to use, and also require measurements due to the limited number of drill guides.

There is accordingly, a need for a doweling jig which overcomes the disadvantages of the prior art. It is further desirable to have a doweling jig provided with a number of holes with an accurately predetermined spacing from one another. Furthermore, to assure a precise coordination between the holes of the joint, use must be made of a common reference plane of the jig for each piece of the joint.

It is an object of this invention to provide a well engineered jig, the use of which is more efficient and faster than the doweling jigs known in the prior art or available on the market.

It is another object of the present invention to provide a novel doweling jig, the cost of which is within the practical, economic reach of even a home craftsman.

It is yet another objective of the present invention to provide a jig in which the only adjustment required is basically the adjustment of the distance between the screws which press against the wooden workpiece to be clamped, when the jig is in use.

It is a further objective of the present invention to develop a jig which does not separate into numerous parts such as screws, nuts, bolts and other components, which could be easily lost, and difficult to replace, or could be replaced only by the time consuming process of writing to the manufacturer or supplier etc, if indeed they were available at all.

The clamp-type doweling jig of the invention is defined in claim 1.

Broadly stated, the clamp-type doweling jig comprises a guide block to which are attached an alignment fixture at one side, and a clamping fixture at the opposite side. The guide block has the form of a parallelepied with top, bottom, lateral, front and back surfaces. In the guide block, several bores are aligned and extend through. The bores are perpendicularly disposed with respect to said top and bottom surfaces. The distance between one end of the guide block, which is delimited by the front surface, and the first of the several bores is equal to the distance between the other end of the guide block, which is delimited by the back surface and the last of the several bores. In each of the several bores, a drill guide is firmly affixed, so that its lower end is substantially flush with the bottom surface of the guide block. On both sides of the guide block, two threaded studs for attaching the alignment and clamping fixtures, respectively, are provided. The fixtures are secured to the studs by knobs with a threaded bore.

The alignment fixture incorporates an attachment plate, for fastening to one of the lateral surfaces of the guide block, and an alignment jaw. The latter extends from the attachment plate downwards and inwards, towards the centre of the guide block. Two through holes are provided in the attachment plate, and are so chosen, that the latter is movable for assembling the alignment fixture with minimal clearance. The alignment jaw incorporates a foot-protrusion which extends partially under the bottom surface, at right angle relative to the attachment plate. The foot-protrusion has an upper face which mates with the bottom surface and runs the length of it, and a reference plane which is parallel to the lateral surfaces and perpendicular to the bottom surface. The clamping fixture includes a joining plate and a clamp plate which forms a single component. The former and latter plates are situated in parallel planes. The joining plate mates with a corresponding lateral surface, while the clamp plate is retracted with respect to the guide block and has two threaded holes, in which screws are inserted for function as clamps.

In one aspect of the invention, the clamping fixture is attached, instead of to the guide block, to the alignment fixture, specifically to the underside and abutting face of it.

In another aspect of the present invention, a removable insert is positioned between the attachment plate and the guide block, or between the attachment plate and the knobs with threaded holes.

Optionally, on both external surfaces of the guide body, which surfaces are coplanar with the front and back surfaces respectively, a flip stop element, which can be rotated in either an operative or inoperative position, is provided.

Although the characteristic features of the invention will be particularly pointed out in the claims, the invention itself, and the manner in which it may be made and used, may be better understood by referring to the following description of the preferred embodiments, taken in conjunction with the appended drawings in which:
Figure 1 is a perspective exploded view of the clamp-type doweling jig according to the present invention; and
Figure 1A is a perspective exploded view of the clamp-type doweling jig according to the present invention, incorporating the flip stop element; and
Figure 2 is a perspective view of the invention when used for drilling a wooden workpiece into the face; and
Figure 2A is a perspective view of the invention when used for drilling a wooden workpiece into the face, incorporating the flip stop element; and
Figure 3 is a perspective view of the invention when used for drilling the edge or end of a wooden workpiece; and
Figure 3A is a perspective view of the invention when used for drilling the edge or end of a wooden workpiece, incorporating the flip stop element.

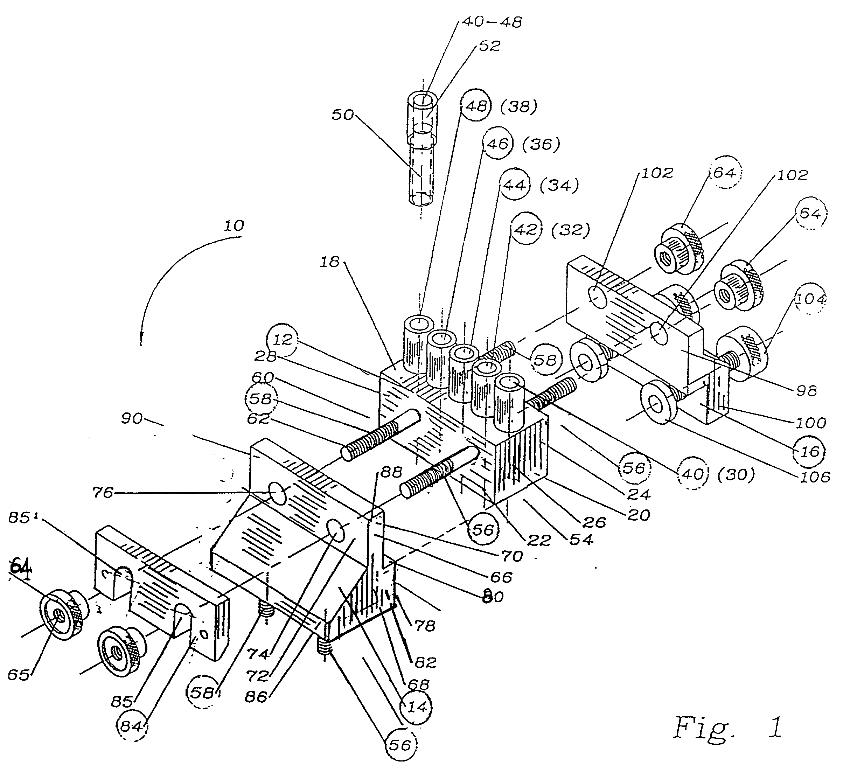

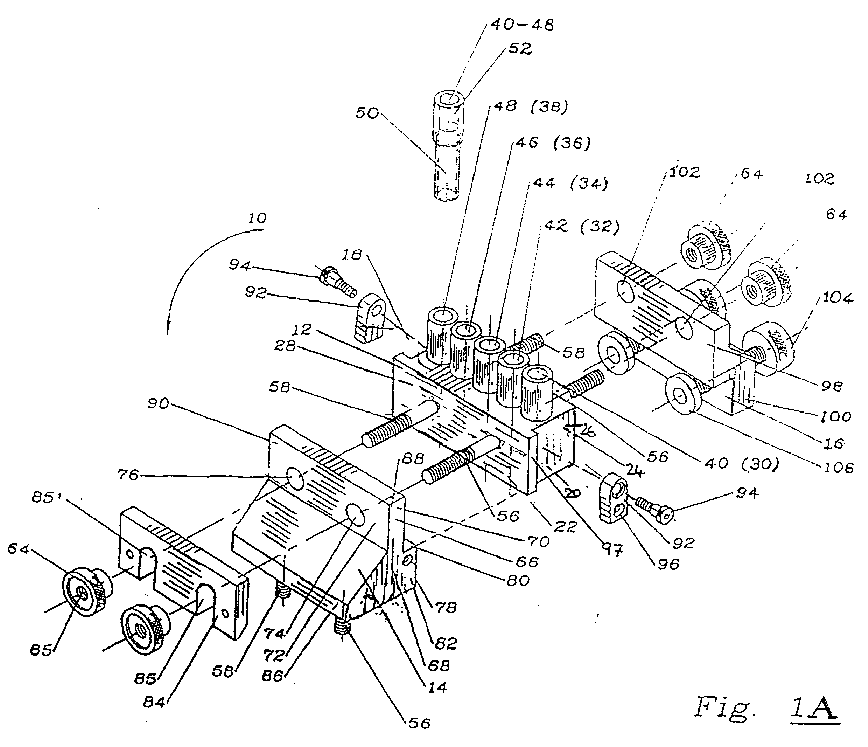

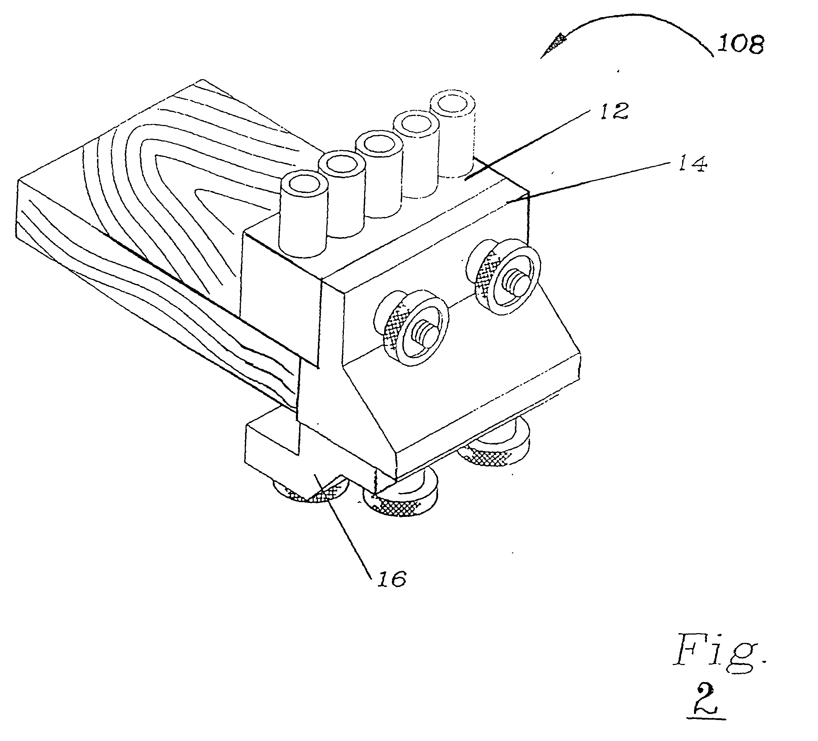

Referring now to Figure 1, clamp-type doweling jig 10 comprises a guide block 12, to which are attached, at one side, an alignment fixture 14 and, at the opposite side, a clamping fixture 16.

Guide block 12 is preferably made of aluminium and has the form of a parallelepied with top and bottom surfaces 18 and 20, which are rectangular, with lateral surfaces 22 and 24, which are also rectangular, and with front and back surfaces 26 and 28, which are square or optionally rectangular.

Five evenly spaced bores 30, 32, 34, 36 and 38 are aligned longitudinally in guide block 12, through which they extend, so that their axes are precisely perpendicularly situated with respect to top and bottom surfaces 18 and 20.

The distance between one end of guide block 12, which is delimited by front surface 26 and bore 30, which is proximate to front surface 26, is equal to the distance between the opposite end of guide block 12, which is delimited by back surface 28, and bore 38 which is the closest bore to back surface 28. Similarly, the distance between front surface 26 and bore 32 is equal to the distance between the opposite end of the guide block surface 28 and bore 36. The distance between front surface 26 and bore 34 is equal to the distance between back surface 28 and bore 34.

Drill guides 40, 42, 44, 46 and 48, preferably made of steel, are inserted respectively in the five evenly spaced bores 30, 32, 34, 36 and 38 in guide block 12. Each of drill guides 40, 42, 44, 46 and 48 is constituted by a bushing which comprises two sections: a lower section 50 and an upper section 52. The lower section 50 is inserted with an interference fit into the five evenly spaced bores 30, 32, 34, 36 and 38 in guide block 12, so that the lower face of each drill guide 40, 42, 44, 46 and 48 is flush with bottom surface 20 of guide block 12, and the upper section 52 extends from top surface 18 of guide block 12. The interior diameter of lower section 50 corresponds approximately to the diameter of the dowel holes to be drilled in a wooden workpiece, and as is implied, to the diameter of a drill bit mounted in a chuck of an electrically powered drill, to be used for dowel drilling (drill bit, chuck and electrically powered drill are not shown). Differing inner bores can be used to accommodate drill bits and dowels of varying sizes. The exterior diameter of upper section 52 is larger than the exterior diameter of lower section 50, so that a shoulder is formed between the former and the latter named sections. The position of the shoulder is so chosen, that the lower face of each of the drill guides 40, 42, 44, 46 and 48 which are inserted respectively in the five evenly spaced bores 30, 32, 34, 36 and 38 in guide block 12, is flush as mentioned previously, with bottom surface 20 of guide block 12. There is, more specifically, between the interior of lower section 50 and the drilling bit, an operational clearance, while between the interior of upper section 52 and the drilling bit there is a relatively larger clearance, to allow the wooden cutting debris to be expelled through the top. The upper end of drill guides 40, 42, 44, 46 and 48 is chamfered on its inner periphery, to form a tapered mouth to facilitate insertion of a close fitting drill bit.

Two threaded studs 56 and 58 are press-fitted on both sides of guide block 12, from which they extend perpendicularly to lateral surfaces 22 and 24.

A knurled lock knob 64 is provided with a central threaded hole 65 to fit the threaded studs 56 and 58.

Alignment fixture 14 contains an attachment plate 66 which abuts against lateral surface 22 of guide block 12, to which it is joined, and an alignment jaw 68. The latter extends downwards and inwards from attachment plate 66, towards the zone wherein the wooden workpiece to be drilled is located.

Attachment plate 66 has a contact surface 70, which is commensurate and mates with lateral surface 22, and a tightening surface 72, opposite to contact surface 70.

Two through holes 74 and 76 are provided in attachment plate 66. The distance between two through holes 74 and 76, as well as their diameter, are so chosen, that attachment plate 66 is assembled with minimal clearance on two threaded studs 56 and 58, which extend from guide block 12 and lateral surface 22, respectively.

Alignment jaw 68 is provided with a foot-protrusion 78. The latter extends at right angles relative to attachment plate 66, under bottom surface 20.

The outline of attachment plate 66, combined with foot-protrusion 78, in its contact zone with guide block 12, represents an L-shaped cutout. Foot-protrusion 78 has an upper face 80, which mates with bottom surface 20 of guide block 12 and runs the length of the latter, and a reference plane 82, parallel to lateral surface 22 and perpendicular to bottom surface 20. In the present embodiment, a distance between the axes of drill guides 40, 42, 44, 46 and 48 and reference plane 82 is chosen to accommodate the requirements for usual joints. This distance indicates where the axes of dowel holes are situated with respect to one of the edges of a wooden workpiece. In order to increase the above distance, a removable slotted insert 84 is intercalated between attachment plate 66 and guide block 12. Removable slotted insert 84 is positioned to obtain a greater distance, as discussed above, between contact surface 70 and lateral surface 22 of guide block 12.

Two slots 85 and 85¹ of the same width, and spaced longitudinally at the same distance as through holes 74 and 76, are machined in removable insert 84. Thus, the latter is also movable with minimal clearance on two threaded studs 56 and 58.

The knurled lock knobs 64 are used to fasten alignment fixture 14 together with removable insert 84 to guide block 12.

Alignment jaw 68 ends at its lowest part with an abutting face 86 which is perpendicular to attachment plate 66 and parallel to bottom surface 20 of guide block 12. Two threaded studs 56 and 58 are press-fitted or threaded, perpendicularly to abutting face 86, into alignment jaw 68. Their size and their longitudinal spacing are the same as for threaded studs 56 and 58 affixed on both sides of guide block 12.

The distance between the axes of threaded studs 56 and 58, which axes extend from guide block 12 and are perpendicular to lateral surface 24 and bottom surface 20, is the same as the distance between the axes of threaded studs 56 and 58, which extend from alignment jaw 68 and are perpendicular to abutting face 86 and reference plane 82.

Optionally, the device can incorporate rotating stops 92, which are affixed to front and back surfaces of guide block 12. Each is attached to surfaces 26 and 28 by a bolt 94, and is provided with a finger indentation 96 to facilitate its use (see Fig 1A). Each flip stop element 92 can be rotated from an inoperative position, wherein the wooden workpiece is able to extend beyond front surface 26 or back surface 28, to an operative position wherein the wooden workpiece is prevented from extending beyond surface 26 or 28. A shoulder 97 extending from each external surface 26 and 28, limits the movement of flip stop element 92 in its retracted position.

Clamping fixture 16 includes a joining plate 98 continued by a clamp plate 100. The former and latter plates are situated in parallel planes. Joining plate 98 is commensurate and mates with lateral surface 24, while clamp plate 100 is retracted with respect to joining plate 98 and, as is implied, to guide block 12. Clamp plate 100 is provided with two threaded holes for use with knurled head screws 104. To each end of knurled head screws 104 a rotatable clamping disc 106 is attached.

Clamping fixture 16 is fastened to guide block 12 by knurled lock knobs 64 used on two threaded studs 56 and 58.

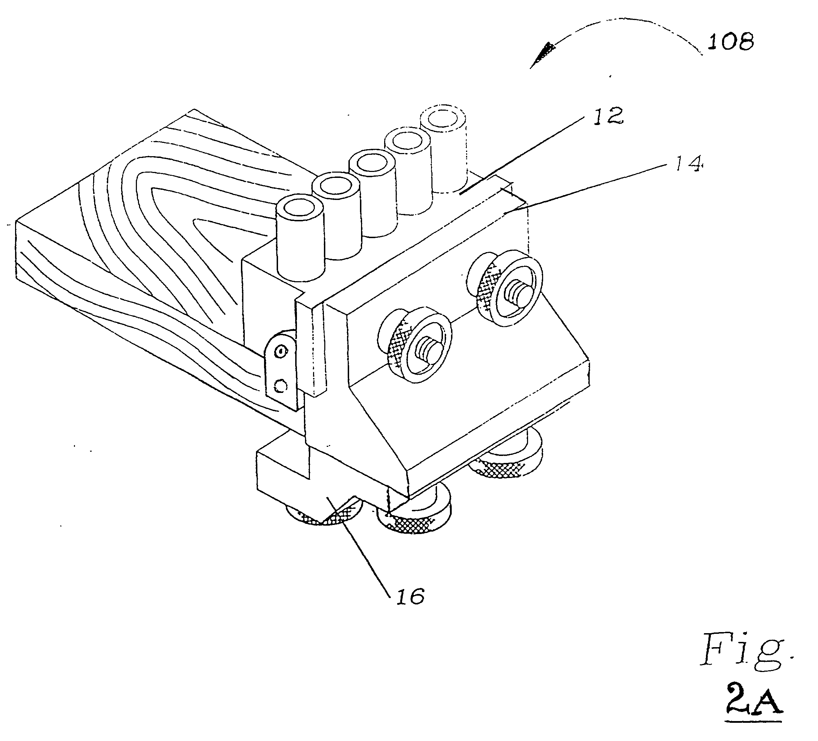

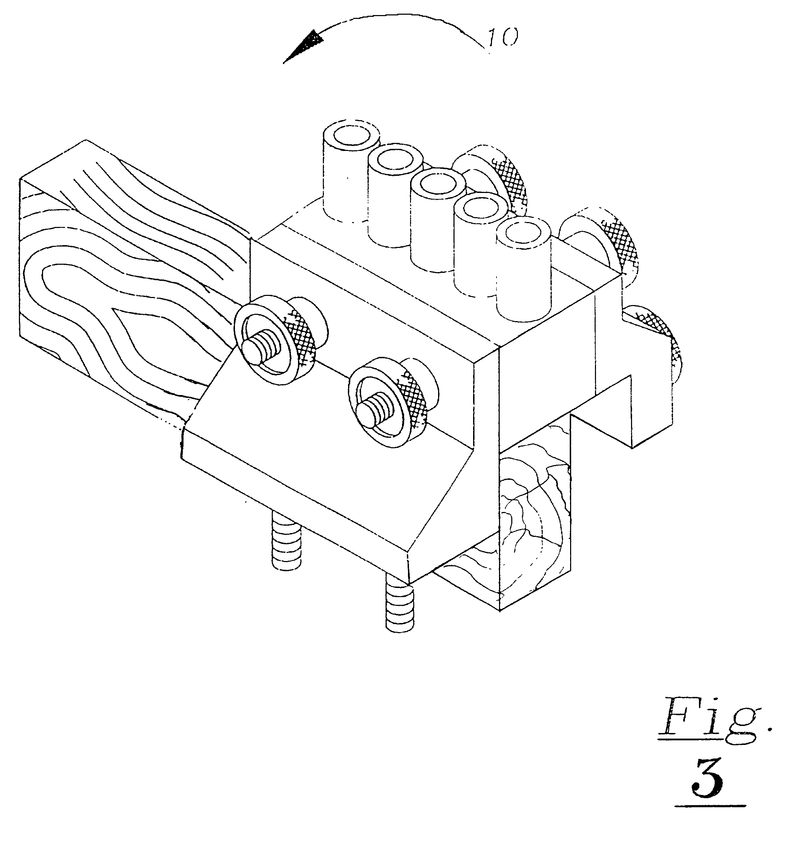

An arrangement modification 108 to the clamp-type jig can be seen in Figure 2. Arrangement modification 108 is adapted to engage to a wooden workpiece to be drilled into the face, instead of the edge or end. Initially, clamping fixture 16 is removed, together with two knurled lock knobs 64, from its position on guide block 12. The clamping fixture 16 is then repositioned so that its joining plate 98 mates with abutting face 86 of alignment fixture 14; two knurled lock knobs 64 are used to refasten clamping fixture 16 to alignment fixture 14.

Having described in detail the structural components of clamp-type doweling jig 10, in connection with the reference numbers on the accompanying drawings, the basic operation of the jig, forming the present invention, will now be disclosed.

For drilling corresponding dowel receiving holes in each edge of a pair of wooden workpieces which form a joint in a furniture item of conventional design, the following operations are required:

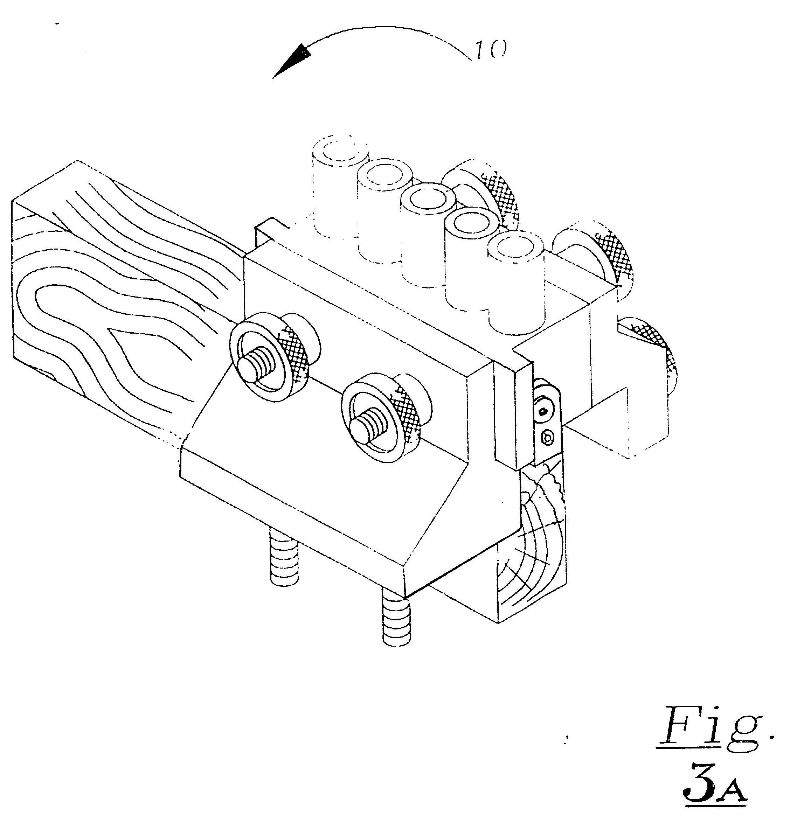

The first wooden workpiece of the above pair is so placed, that its finished surface abuts against reference plane 82, and then, moved laterally, so that its reference end reaches the appropriate end of reference plane 82. Optionally, the adjacent flip stop element 92, can be used. Thus, the fact that the reference end of the first wooden workpiece reaches the end of reference plane 82, is not only visually inspected, but is also physically controlled. At this point in time, knurled-head screws 104 of clamping fixture 16 are tightened and the first drilling operation can take place. Now, in order to locate and then drill dowel receiving holes in the second wooden workpiece, the latter is so positioned that its finished surface abuts against reference plane 82, but its reference end is so located as to reach the opposite end of reference plane 82. In this position, clamping fixture 16 is used to firmly attach and secure the second wooden workpiece. The second drilling operation can now take place. Optionally, an adjacent flip stop element 92, opposite to that used for the first wooden workpiece, can be used. (Fig 1A, Fig 2A, Fig 3A)

For an edge to face joint, the dowel receiving holes are made initially in a first wooden workpiece which includes an edge. This first wooden workpiece is brought with the finished surface in contact with the reference plane 82. The distance from the latter to the first bore 30 or 38 must be the same as the distance from the reference end of the first wooden workpiece to the first dowel receiving hole.

In order to locate and drill dowel receiving holes in the second wooden workpiece which contains the face, clamping fixture 16 is removed from clamp-type doweling jig 10 and, as can be seen in Figure 2, repositioned for attachment to alignment fixture 14, specifically to the underside abutting face 86. The wooden workpiece is so positioned, that its end is brought in contact with reference plane 82, while its surface to be drilled contacts bottom surface 20 of guide block 12. Then, the wooden workpiece is moved laterally, so that its reference end abuts the end of reference plane 82, opposite to that end used for drilling the end in the first piece of the pair. Optionally, a flip stop element 92 can be used when drilling the end and an opposite flip stop 92 for drilling the face.

The detailed embodiment disclosed above is merely exemplary of the invention, which may be embodied in various forms. Therefore, specific structural and functional details, disclosed herein, are not to be interpreted as limiting, but merely as a basis for the claims and as a representative basis for teaching one skilled in the art, as to the various uses of the present invention in virtually any appropriately detailed structure.

## Claims

1. A clamp type doweling jig (10) comprising in combination:
guide means (12) to which are attached,
alignment means (14), at one side;
clamping means (16), at the opposite side;
said guide means (12) including a block, which has the form of a parallelepied, with top (18), bottom (20), lateral (22, 24), front (26) and back (28) surfaces, and in which block several evenly spaced bores (30, 32, 34, 36, 38) are aligned and extend through, said bores being perpendicularly disposed with respect to said top (18) and bottom (20) surfaces, and the distance between one end of said block (12), which is delimited by said front surface (26), and the first (30) of said several bores is equal to the distance between the other end of said block (12), which is delimited by said back surface (28), and the last (38) of said several bores, and in each of said several bores a drill guide (40, 42, 44, 46, 48) is firmly affixed, so that its lower end is flush with said bottom surface (20), and on both sides of said block, for attaching said alignment means (14) and, respectively, said clamping means (16), two threaded means (56, 58) are permanently fastened, each threaded means having means for assembling with minimal clearance said alignment (14) and clamping means (16), and a threaded portion, to which a knob (64) with a threaded hole is screwed, and said alignment means (14) incorporates an attachment plate (66) for fastening to one of said lateral surfaces (22, 24) of said block (12), and an alignment jaw (68), the latter extending from said attachment plate (66) downwards and inwards, towards the centre of said block (12); two through holes (74, 76) provided in said attachment plate (66) are so chosen that the latter is moveable on said means for assembling with minimal clearance said alignment means (14), said alignment jaw (68) incorporating a foot-protrusion (78) which extends partially under said bottom surface (20), at right angles relative to said attachment plate (66), so that an upper face of said foot-protrusion (78) mates with said bottom surface (20) and runs the length of it, and a reference plane of said foot-protrusion (78) is parallel to said lateral surfaces (22, 24) and perpendicular to said bottom surface (20), and said clamping means (16) a joining plate (98) connected to a clamp plate (100), the former and latter plates being situated in parallel planes and said joining plate (98) mates with corresponding lateral surface (22, 24). while said clamp plate (100) is retracted with respect to said joining plate (98) and is provided with two threaded holes in which screw clamps are inserted.

2. A clamp-type doweling jig, as defined in Claim 1, wherein for an arrangement modification, said clamping means (16) is removed from said block (12) and attached to said alignment (14) means, respectively to said abutting face.

3. A clamp-type doweling jig, as defined in Claim 1 or 2, further comprising a removable insert which is positioned between said attachment plate (66) and said block (12), or between said attachment plate and said knobs with threaded holes.

4. A clamp-type doweling jig, as defined in any of the previous Claims, further comprising a flip stop element (92), which can be rotated in either operative or inoperative positions.

## Patentansprüche

1. Einspann-Vorrichtung für das Bohren von Dübellöchern (10), die in Kombination Folgendes umfasst:
Führungsvorrichtung (12), an der auf einer Seite eine Ausrichtungsvorrichtung (14), auf der gegenüberliegenden Seite eine Einspannvorrichtung (16) angebracht ist;
wobei die genannte Führungsvorrichtung (12) einen Block aufweist, der die Form eines Parallelepiped mit Oberseite (18), Unterseite (20), Seitenflächen (22, 24), Vorderseite (26) und Rückseite (28) hat und wobei in diesem Block mehrere gleichmäßig beabstandete Bohrungen (30, 32, 34, 36, 38) axial ausgerichtet sind und sich durch ihn hindurch erstrecken,
wobei die genannten Bohrungen im Verhältnis zur genannten Ober- (18) und Unterseite (20) perpendikular angeordnet sind, und wobei der Abstand zwischen einem Ende des genannten Blocks (12), das von der genannten Vorderseite (26) abgegrenzt wird, und der ersten (30) der genannten mehreren Bohrungen gleich dem Abstand zwischen dem anderen Ende des genannten Blocks (12), das von der genannten Rückseite (28) abgegrenzt wird, und der letzten (38) der genannten mehreren Bohrungen ist, und
wobei in jeder der genannten mehreren Bohrungen eine Bohrerführung (40, 4?, 44, 46, 48) fest befestigt ist, sodass ihr unteres Ende mit der genannten Unterseite (20) bündig ist, und auf beiden Seiten des genannten Blocks zum Anbringen der genannten Ausrichtungsvorrichtung (14) beziehungsweise der genannten Einspannvorrichtung (16) zwei Gewindevorrichtungen (56, 58) permanent befestigt sind, wobei jede Gewindevorrichtung Mittel zum Montieren der genannten Ausrichtungs- (14) und Einspannvorrichtung (16) mit minimalem Zwischenraum und einen Gewindeabschnitt hat, auf den ein Knopf (64) mit einem Gewindeloch aufgeschraubt ist, und wobei die genannte Ausrichtungsvorrichtung (14) eine Befestigungsplatte (66) zum Befestigen an einer der genannten Seitenflächen (22, 24) des genannten Blocks (12) und eine Ausrichtungsbacke (68) hat, wobei die Letztere sich von der genannten Befestigungsplatte (66) nach unten und nach innen zur Mitte des genannten Blocks (12) hin erstreckt; wobei zwei durchgehende Löcher (74, 76) in der genannten Befestigungsplatte (66) so gewählt sind, dass die Letzere auf den genannten Mitteln zum Montieren der genannten Ausrichtungsvorrichtung (14) mit minimalem Zwischenraum bewegbar ist, wobei die genannte Ausrichtungsbacke (68) einen Fußvorsprung (78) hat, der sich teilweise unter die genannte Unterseite (20) erstreckt, im rechten Winkel zur genannten Befestigungsplatte (66), sodass eine Oberseite des genannten Fußvorsprungs (78) mit der genannten Unterseite (20) zusammenpasst und sich über ihre Länge erstreckt, und eine Bezugsebene des genannten Fußvorsprungs (78) parallel zu den genannten Seitenflächen (22, 24) und perpendikular zur genannten Unterseite (20) ist, und wobei die genannte Einspannvorrichtung (16) eine Verbindungsplatte (98) hat, die mit einer Einspannplatte (100) verbunden ist, wobei die erstere und die letztere Platte sich in parallelen Ebenen befinden und die genannte Verbindungsplatte (98) mit der entsprechenden Seitenfläche (22,24) zusammenpasst, während die genannte Einspannplatte (100) im Verhältnis zur genannten Verbindungsplatte (98) zurückgezogen ist und mit zwei Gewindelöchern versehen ist, in welche Schraubklemmen eingefügt werden.

2. Einspann-Vorrichtung für das Bohren von Dübellöchern nach Anspruch 1, bei der die genannte Einspannvorrichtung (16) für eine Anordnungsmodifikation von dem genannten Block (12) entfernt und an der genannten Ausrichtungsvorrichtung (14) beziehungsweise an der genannten Stoßseite angebracht ist.

3. Einspann-Vorrichtung für das Bohren von Dübellöchern nach Anspruch 1 oder 2, ferner umfassend einen abnehmbaren Einsatz, der zwischen der genannten Befestigungsplatte (66) und dem genannten Block (12) oder zwischen der genannten Befestigungsplatte und den genannten Knöpfen mit Gewindelöchern positioniert ist.

4. Einspann-Vorrichtung für das Bohren von Dübellöchern nach einem der vorangehenden Ansprüche, ferner umfassend ein Schwenkanschlagelement (92), das auf Betriebs- oder Nichtbetriebspositionen gedreht werden kann.

## Revendications

1. Gabarit à goujons à bride (10) comprenant en combinaison :
un moyen de guidage (12) auquel est attaché,
un moyen d'alignement (14), sur un côté ;
un moyen de serrage (16), sur le côté opposé ;
ledit moyen de guidage (12) comprenant un bloc, qui présente la forme d'un parallélépipède, comportant des surfaces supérieure (18), inférieure (20), latérales (22, 24), avant (26) et arrière (28), et bloc dans lequel sont alignés et que traversent plusieurs alésages (30, 32, 34, 36, 38) à intervalles réguliers, lesdits alésages étant disposés de manière perpendiculaire par rapport auxdites surfaces supérieure (18) et inférieure (20), et la distance entre une extrémité dudit bloc (12), qui est délimitée par ladite surface avant (26), et le premier (30) desdits plusieurs alésages est égale à la distance entre l'autre extrémité dudit bloc (12), qui est délimitée par ladite surface arrière (28), et le dernier (38) desdits plusieurs alésages, et dans chacun desdits plusieurs alésages un guide de foret (40, 42, 44, 46, 48) est fermement fixé, de sorte que son extrémité inférieure est au niveau de ladite surface inférieure (20), et des deux côtés dudit bloc, pour attacher ledit moyen d'alignement (14) et, respectivement, ledit moyen de serrage (16), deux moyens filetés (56, 58) sont fixés de manière permanente, chaque moyen fileté comportant un moyen pour assembler avec un dégagement minimal ledit moyen d'alignement (14) et ledit moyen de serrage (16), et une partie filetée, dans laquelle un bouton (64) comportant un orifice fileté est vissé, et ledit moyen d'alignement (14) intègre une plaque de fixation (66) pour fixer une desdites surfaces latérales (22, 24) audit bloc (12), et une mâchoire d'alignement (68), cette dernière s'étendant de ladite plaque de fixation (66) vers le bas et vers l'intérieur, en direction du centre dudit bloc (12) ; deux trous de passage (74, 76) pratiqués dans ladite plaque de fixation (66) sont choisis de sorte que cette dernière peut se déplacer sur lesdits moyens pour être assemblée avec un dégagement minimal avec ledit moyen d'alignement (14), ladite mâchoire d'alignement (68) intégrant une saillie en forme de pied (78) qui s'étend partiellement sous ladite surface inférieure (20), à angles droits par rapport à ladite plaque de fixation (66), de sorte qu'une face supérieure de ladite saillie en forme de pied (78) s'accouple avec ladite surface inférieure (20) et s'étend sur la longueur de celle-ci, et un plan de référence de ladite saillie en forme de pied (78) est parallèle auxdites surfaces latérales (22, 24) et perpendiculaire à ladite surface inférieure (20), et ledit moyen de serrage (16) comprend une plaque d'assemblage (98) connectée à une plaque de serrage (100), cette première et cette dernière plaques se trouvant dans des plans parallèles et ladite plaque d'assemblage (98) s'accouple avec la surface latérale correspondante (22, 24), tandis que ladite plaque de serrage (100) est retirée par rapport à ladite plaque d'assemblage (98) et est pourvue de deux orifices filetés dans lesquels des vis de serrage sont insérées.

2. Gabarit à goujons à bride suivant la revendication 1, dans lequel, dans une variante de montage, ledit moyen de serrage (16) est retiré dudit bloc (12) et attaché audit moyen d'alignement (14), respectivement par rapport à ladite face de butée.

3. Gabarit à goujons à bride suivant la revendication 1 ou 2, comprenant en outre un insert amovible qui est placé entre ladite plaque de fixation (66) et ledit bloc (12), ou entre ladite plaque de fixation et lesdits boutons comportant des orifices filetés.

4. Gabarit à goujons à bride suivant l'une quelconque des revendications précédentes, comprenant en outre un élément d'arrêt basculant (92), qui peut être tourné soit dans une position active, soit dans une position inactive.
